# FASCICULE DE BREVET EUROPEEN

(11) **EP 2 241 515 B1**
(45) Date de publication et mention de la délivrance du brevet: **05.06.2013**
(21) Numéro de dépôt: 10159816.7
(22) Date de dépôt: 13.04.2010
(51) Int. Cl.: B65D 51/24, B29C 45/14

(54) **Couvercle destiné à fermer l'ouverture d'un contenant**
Behälterverschluss
Cover for closing the opening of a receptacle

(30) Priorité: 15.04.2009 FR 0952471
(43) Date de publication de la demande: 20.10.2010
(73) Titulaire: Europlastiques, 53007 Laval (FR)
(72) Inventeur: Barberot, Nicolas, 53240 Saint Jean sur Mayenne (FR)
(74) Mandataire: Maillet, Alain

(56) Documents cités:
- EP-A- 1 038 790
- DE-C1- 19 948 894
- FR-A- 2 903 041
- GB-A- 2 331 060

## Description

La présente invention concerne un couvercle pour un emballage et en particulier un emballage alimentaire. L'invention couvre encore un emballage incluant un tel couvercle.

Un tel emballage est constitué généralement d'un contenant destiné à être rempli par une denrée alimentaire et d'un couvercle de recouvrement de son ouverture. Un opercule étanche recouvre encore l'ouverture pour protéger ladite denrée pendant sa période de conservation. Cet opercule n'est cependant pas toujours indispensable.

L'emballage, et en particulier le couvercle, sont revêtus généralement d'une étiquette informative. Cette étiquette peut être appliquée avantageusement par un procédé dit IML (In Mold Labelling) dans lequel l'étiquette est placée dans le moule de fabrication, puis de la matière plastique, chauffée à l'état pâteux, est injectée dans le moule de telle sorte que l'étiquette puisse recouvrir la face externe du couvercle.

Dans le brevet FR-A-2 903 041, le demandeur préconise de choisir pour la fabrication de l'étiquette une matière différente de celle destinée à la fabrication du contenant ou du couvercle, ce qui permet de la rendre amovible, par exemple pour dégager un évent de démoulage prévu dans la paroi de fond du contenant. Par ailleurs, l'absence de couche intermédiaire entre l'étiquette et son support pour réduire l'adhérence entre ces deux composants élimine tout risque de migration de matière dans la denrée alimentaire.

Le demandeur a cherché à apporter une nouvelle fonctionnalité à ce type de couvercle et ceci sans en modifier sensiblement son coût de fabrication.

A cet effet, est proposé un couvercle destiné à fermer l'ouverture d'un contenant d'un emballage, le couvercle étant fabriqué en matière plastique par injection de matière dans un moule et dont au moins une paroi est recouverte par une étiquette posée par un procédé IML (In Mold Labelling), la matière de l'étiquette étant différente de celle du couvercle pour la rendre amovible; selon l'invention l'étiquette recouvre un emplacement dans lequel est présent un ustensile.

Le couvercle incorpore de la sorte un ustensile accessible par le simple retrait d'une partie d'étiquette amovible. Son coût de fabrication est, à taille égale, sensiblement le même qu'un couvercle de l'art antérieur.

L'absence de colle ou d'un film anti-adhérent entre l'étiquette et la paroi du couvercle évite tout risque de migration de matière dans la denrée.

Selon l'invention, l'étiquette est formée d'une partie amovible et une ligne de prédécoupage délimitant la ou chaque frontière de la partie amovible.

Une structure de l'étiquette comprenant une partie centrale amovible convient, en particulier, pour un couvercle rond.

Selon une caractéristique additionnelle de l'invention, l'étiquette est formée d'une première partie latérale, reliée à une seconde partie latérale par l'intermédiaire d'une ligne de prédécoupage, la première partie latérale recouvrant l'emplacement, la première partie latérale incluant une languette de préhension.

Cette structure de l'étiquette convient, en particulier, pour un couvercle carré ou rectangulaire.

Selon une caractéristique additionnelle de l'invention, l'étiquette est d'un seul tenant et elle inclut une languette de préhension.

Toute l'étiquette est enlevée en tirant sur la languette, découvrant alors l'emplacement contenant l'ustensile.

Selon une caractéristique additionnelle de l'invention, l'emplacement est formé d'un passage réalisé au travers de la paroi de fermeture du couvercle.

L'emplacement est avantageusement réalisé pendant la fabrication du couvercle dans le moule.

Selon une caractéristique additionnelle de l'invention, l'ustensile est solidaire du couvercle, dans l'emplacement, par l'intermédiaire de pontets de liaison.

L'ustensile est fabriqué directement dans l'emplacement pendant la fabrication du couvercle dans le moule.

Selon une caractéristique additionnelle de l'invention, le couvercle est fabriqué dans une matière différente de celle de l'ustensile.

La matière de l'ustensile peut alors être choisie indépendamment de celle du couvercle pour obtenir des qualités particulières de rigidité, de souplesse, d'aspect dudit ustensile.

Selon une caractéristique additionnelle de l'invention, l'ustensile est un composant rapporté dans l'emplacement.

Cette solution est adoptée pour un ustensile d'un genre particulier, non susceptible d'être fabriqué en même temps que le couvercle.

Selon une caractéristique additionnelle de l'invention, le couvercle est fabriqué en polypropylène injecté et l'étiquette, ou une sous-couche de ladite étiquette destinée à être mise en contact avec ledit couvercle, est fabriquée en polyéthylène expansé de type basse densité.

Selon une caractéristique additionnelle de l'invention, le couvercle est fabriqué en polypropylène injecté et l'étiquette, ou une sous-couche de ladite étiquette destinée à être mise en contact avec ledit couvercle, est fabriquée en polypropylène de type pelable, fabriqué par un procédé de coextrusion ou par un procédé d'enduction.

Selon une caractéristique additionnelle de l'invention, le couvercle est fabriqué en polypropylène injecté et une sous-couche de ladite étiquette destinée à être mise en contact avec ledit couvercle, est fabriquée en un vernis de type pelable, plein ou tramé, imprimé au verso de l'étiquette.

Un emballage comprenant un contenant dont l'ouverture est fermée par un couvercle tel qu'il vient d'être décrit fait partie également de l'invention.

Selon une caractéristique additionnelle de l'invention, l'emballage est un pot alimentaire.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue en perspective d'un emballage alimentaire selon l'invention,
la Fig. 2 représente une vue en perspective d'un emballage alimentaire dont une partie de l'étiquette recouvrant son couvercle est partiellement retirée selon l'invention,
la Fig. 3 représente une vue en perspective d'un emballage alimentaire dont la partie de l'étiquette recouvrant son couvercle a été retirée selon l'invention,
la Fig. 4 représente une vue en perspective d'un emballage alimentaire comprenant une première variante de réalisation de son couvercle selon l'invention,
la Fig. 5 représente une vue en perspective d'un emballage alimentaire comprenant une seconde variante de réalisation de son couvercle selon l'invention,
la Fig. 6 représente une vue en perspective d'un emballage alimentaire comprenant une troisième variante de réalisation de son couvercle selon l'invention,
la Fig. 7 représente une vue de dessus d'une quatrième variante de réalisation d'un couvercle selon l'invention,
la Fig. 8 représente une vue en perspective d'un emballage alimentaire comprenant une cinquième variante de réalisation de son couvercle selon l'invention,
la Fig. 9 représente une vue schématique en coupe d'un moule de fabrication d'un couvercle et d'une étiquette amovible selon l'invention,
la Fig. 10a représente une vue agrandie et en coupe d'une paroi d'un couvercle dont la face externe est recouverte d'une étiquette amovible selon l'invention,
la Fig. 10b représente une vue agrandie et en coupe d'une paroi d'un couvercle dont la face externe est recouverte par une première variante de réalisation d'une étiquette amovible selon l'invention,
la Fig. 10c représente une vue agrandie et en coupe d'une paroi d'un couvercle dont la face externe est recouverte par une seconde variante de réalisation d'une étiquette amovible selon l'invention et,
la Fig. 10d représente une vue agrandie et en coupe d'une paroi d'un couvercle dont la face externe est recouverte par une troisième variante de réalisation d'une étiquette amovible selon l'invention.

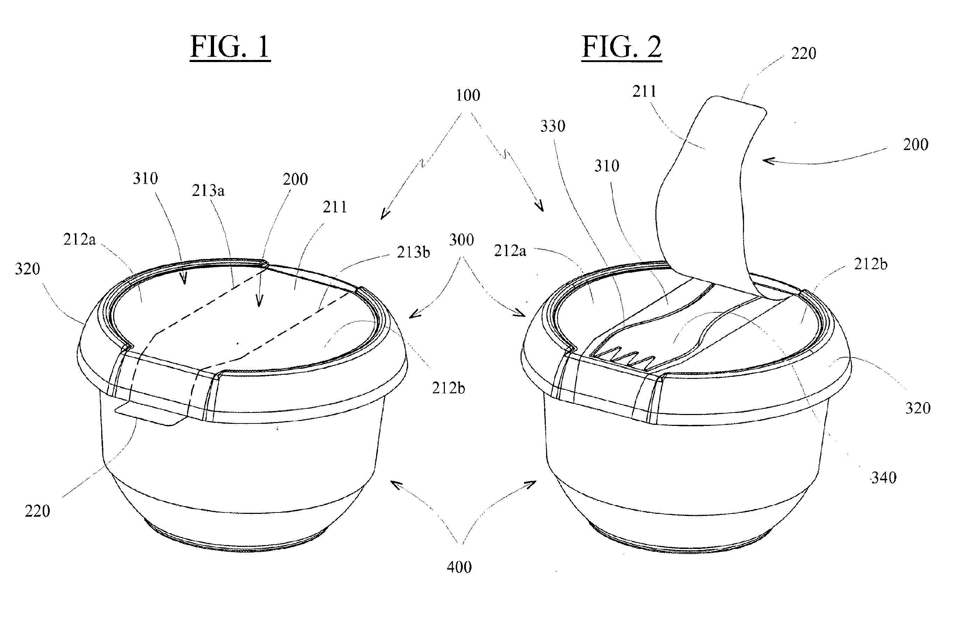

L'emballage 100 présenté sur la Fig. 1 est du type alimentaire, c'est-à-dire qu'il est destiné à contenir une denrée alimentaire. Il se compose d'un contenant 400 dont l'ouverture est normalement scellée à sa périphérie et de manière hermétique par un opercule, non visible, pour préserver la denrée alimentaire pendant la durée de conservation de celle-ci. Le contenant 400 se présente ici sous la forme d'un pot alimentaire de section circulaire. L'emballage comprend encore un couvercle 300 qui recouvre l'ouverture du contenant pour le refermer.

Le couvercle 300 est constitué d'une paroi de fermeture 310 qui est ici plane et circulaire et qui est bordée d'une virole périphérique 320 destinée à recouvrir l'ouverture du contenant.

Une étiquette 200 recouvre la face externe de la paroi de fermeture 310. L'étiquette 200 est destinée à présenter un marquage, par exemple une marque, des informations destinées aux consommateurs ou encore des informations réglementaires.

L'étiquette 200 est de type amovible ou pour le moins partiellement amovible. Elle est pourvue à cet effet d'une languette 220 de préhension qui déborde à l'extérieur de la paroi de fermeture 310 pour faciliter son retrait du couvercle.

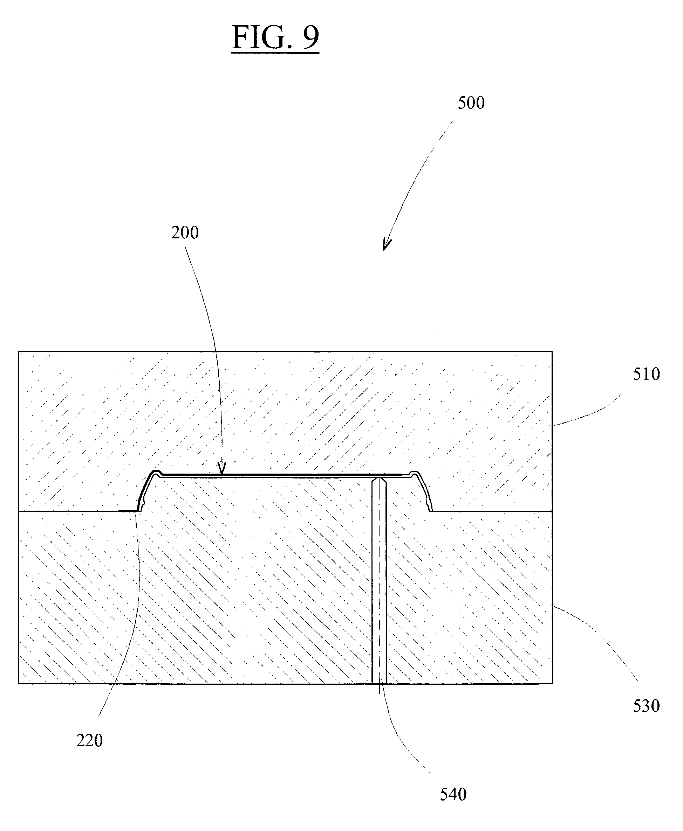

A la Fig. 9, on a représenté un moule 500 de fabrication d'un couvercle pour un emballage tel que celui qui est présenté aux Figs. 1 à 6, et de son étiquette de recouvrement de sa paroi de fermeture.

Le moule 500 de fabrication par injection de matière plastique comprend un premier élément 510, un second élément 530. On place dans le moule 500 ouvert, une étiquette 200 contre une paroi de moulage du premier élément 510 de telle sorte que la face externe de l'étiquette 200 soit mise en contact avec une paroi de moulage du premier élément 510, puis on referme le moule en rapprochant les deux éléments 510 et 530.

Dans cet exemple de réalisation, une extrémité de l'étiquette 200 est placée en dehors de la cavité de moulage et est ici maintenue prisonnière entre le premier élément 510 et le second élément 530 de manière à former une languette 220 de préhension de l'étiquette 200 sur le couvercle à l'issue de sa fabrication.

On injecte de la matière plastique au travers d'une buse 540 et qui s'insinue alors dans la cavité de moulage, c'est-à-dire dans le volume libre existant entre le premier élément 510, et le second élément 530 pour fabriquer le couvercle.

La partie de la face de l'étiquette 200 exposée dans la cavité libre du moule est recouverte par le flux de matière à l'état plastique si bien que l'étiquette devient solidaire d'une face externe d'une paroi du couvercle.

Pour éviter que l'étiquette 200 ne soit soudée au couvercle sous l'effet de la pression et de la température d'injection de la matière, ce qui conduirait à ne plus pouvoir la retirer du couvercle à l'issue de sa fabrication, on fabrique l'étiquette 200 de telle sorte que sa face mise en contact avec la matière injectée soit de nature différente de celle du couvercle.

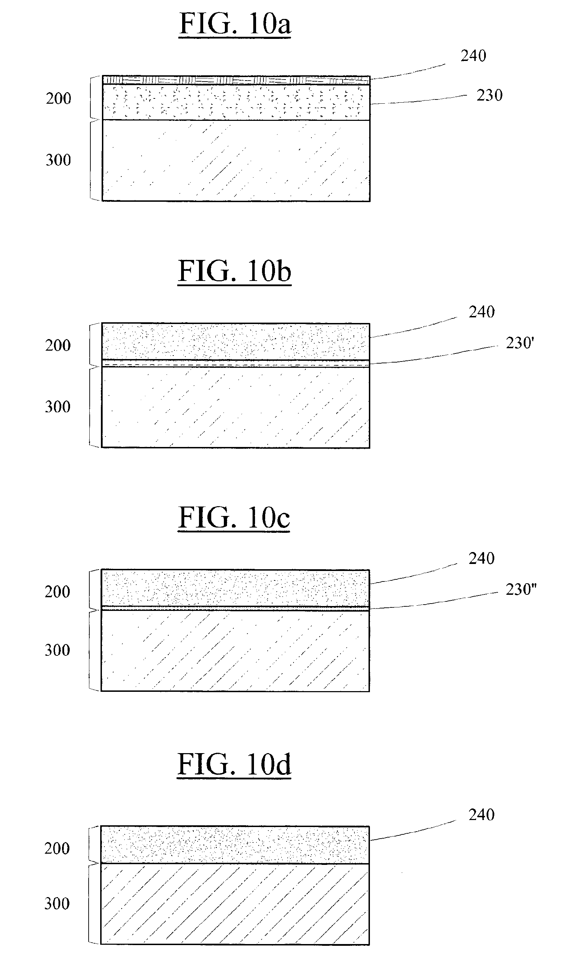

A la Fig. 10a, l'étiquette 200 est constituée d'une sous-couche 230 et d'un revêtement externe 240 d'apparence. La sous-couche 230 est destinée à être liée avec la face externe de la paroi de fermeture du couvercle. La matière choisie pour la fabrication du couvercle est du polypropylène injecté alors que pour la fabrication de la sous-couche 230 de l'étiquette 200, on choisit du polyéthylène expansé de type basse densité. Le revêtement externe 240 est constitué, de préférence, d'un film en polypropylène.

La combinaison de ces deux matières, c'est-à-dire la matière de la sous-couche de l'étiquette exposée dans la cavité de moulage et la matière injectée dans le moule, procure une liaison plus faible qu'une soudure si bien que l'étiquette 200 peut être retirée manuellement du couvercle, en tirant sur sa languette, sans être déchirée.

Dans une première variante de réalisation représentée à la Fig. 10b, la matière choisie pour la fabrication de la sous-couche 230' de l'étiquette 200 est un polypropylène de type pelable, fabriqué par un procédé de coextrusion ou par un procédé d'enduction. La matière choisie pour la fabrication du couvercle est toujours du polypropylène injecté.

Dans une seconde variante de réalisation représentée à la Fig. 10c, la matière choisie pour la fabrication de la sous couche 230" est un vernis de type pelable, plein ou tramé, imprimé au verso de l'étiquette.

On remarquera que l'étiquette pourrait être constituée d'une seule couche fabriquée dans une matière différente de celle utilisée pour la fabrication du couvercle. Cette troisième variante de réalisation de l'étiquette est présentée sur la Fig. 10c. La matière choisie pour la fabrication de l'étiquette 200 est dans un mode de réalisation avantageux, du polypropylène et la matière choisie pour la fabrication du couvercle est du polyéthylène.

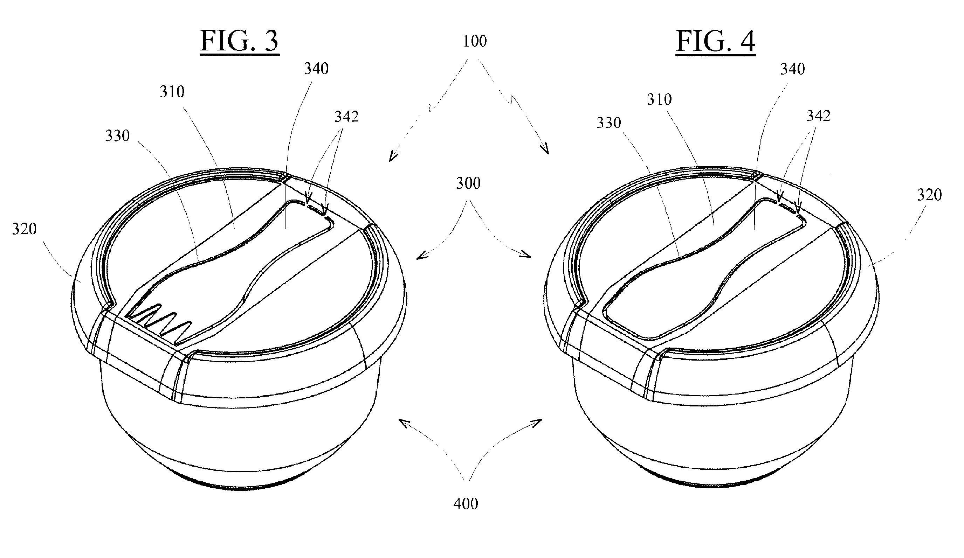

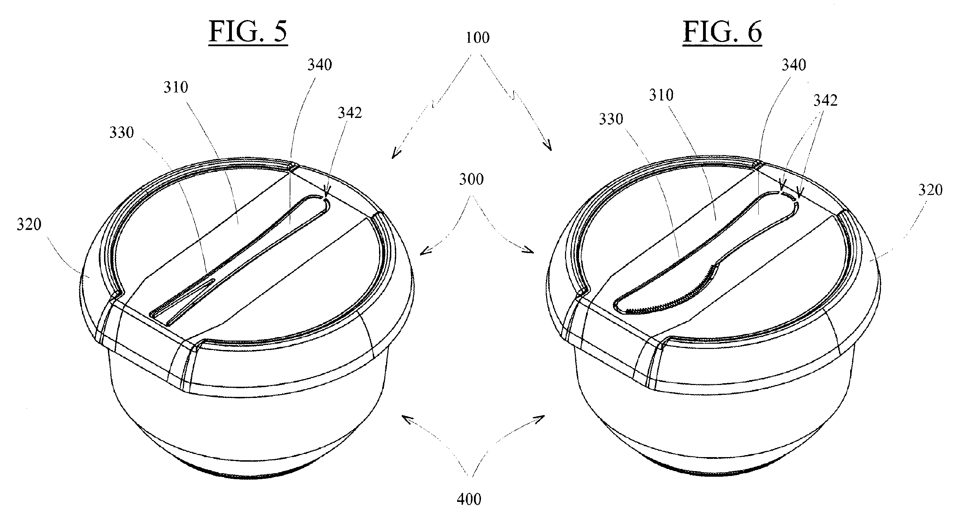

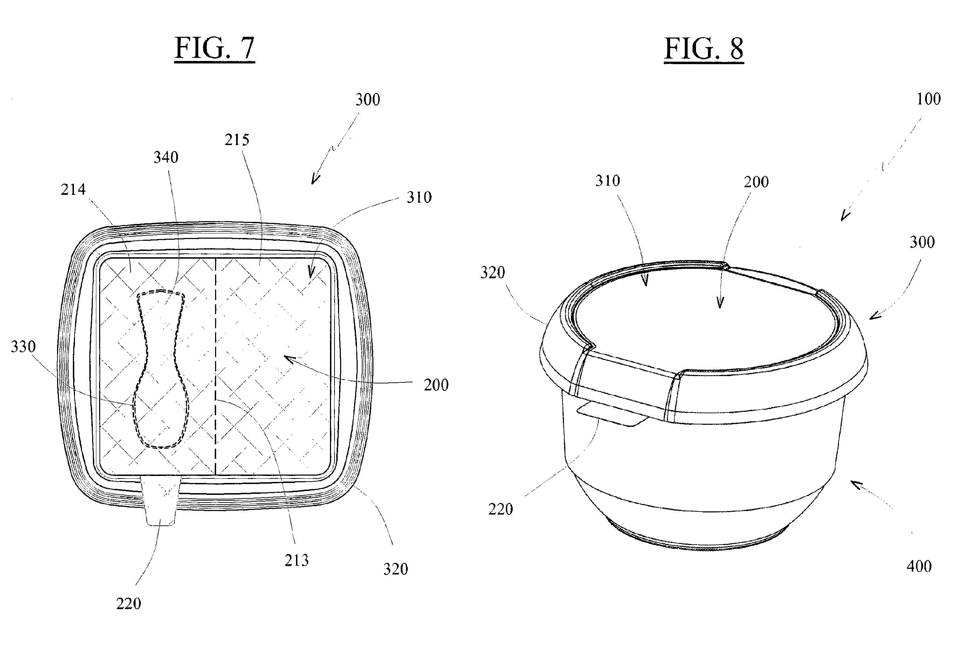

Sur les Figs. 2 à 7, un emplacement 330 est formé au travers de la paroi de fermeture 310 du couvercle 300 et dans lequel apparaît un ustensile 340. L'emplacement est réalisé avantageusement pendant la fabrication du couvercle dans le moule. L'ustensile permet à l'utilisateur de prélever la denrée alimentaire du contenant à l'issue du retrait de son opercule. Il est constitué d'une fourchette sur les Figs. 2 et 3, d'une spatule sur les Figs. 4 et 7, d'un pic sur la Fig. 5, d'un couteau sur la Fig. 6.

L'ustensile est avantageusement fabriqué en même temps que le couvercle pendant l'injection de la matière dans le moule de fabrication. Il s'inscrit dans l'emplacement 330 en étant réuni à la paroi de fermeture 310 par un ou plusieurs pontets de liaison 342, visibles distinctement sur les Figs. 3 à 6. Un interstice sépare la périphérie de l'ustensile 340 de son emplacement 330, excepté au niveau des pontets. En délogeant l'ustensile de son emplacement, l'utilisateur fracture ces pontets, c'est-à-dire les points de rattachement sécables qui le relient avec le couvercle, désolidarisant ainsi l'ustensile du couvercle.

L'ustensile peut encore être fabriqué dans une autre matière que celle du couvercle en mettant en oeuvre un procédé d'injection bi-matière. On peut ainsi utiliser pour fabriquer l'ustensile, par exemple une fourchette, une matière plus rigide que celle utilisée pour fabriquer le couvercle. On peut encore choisir des matières de couleurs différentes. Dans un moule mettant en oeuvre ce procédé d'injection bi-matière, la buse alimente deux canaux qui débouchent, pour l'un, dans la cavité de moulage du couvercle et, pour l'autre, dans la cavité de moulage de l'ustensile. L'ustensile moulé n'est alors plus relié par des pontets au corps du couvercle, et c'est l'étiquette qui relie le couvercle avec l'ustensile.

Dans une autre variante de réalisation, non représentée, l'ustensile est constitué d'un élément rapporté dans l'emplacement. Il peut être fabriqué indépendamment du couvercle. Lorsqu'il est placé dans l'emplacement, il repose sur l'opercule. Cette solution peut être adoptée lorsque l'ustensile ne peut pas être fabriqué par moulage en même temps que le couvercle.

Sur les Figs. 1 et 2, l'étiquette 200 se compose d'une partie centrale 211 amovible, placée entre deux parties latérales 212a et 212b. Deux lignes de prédécoupage 213a et 213b formées, par exemple de découpage en pointillés, et matérialisées ici par deux traits fins interrompus, délimitent respectivement la frontière entre la partie centrale 211 et les deux parties latérales 212a, 212b.

La partie centrale 211 de l'étiquette recouvre au moins partiellement l'emplacement 330. Sur ces Figs. 1 et 2, l'étiquette 200 recouvre la totalité de l'emplacement 330 de réception de l'ustensile 340. C'est également cette partie centrale qui est pourvue d'une languette 220 qui déborde de la virole périphérique 320 du couvercle 300 pour en permettre la préhension afin d'en faciliter son retrait. Lorsque cette partie centrale est retirée, l'utilisateur a accès à l'ustensile pour le retirer de son emplacement, comme le présente la Fig. 3.

Dans la variante de réalisation du couvercle présentée sur la Fig. 7, l'étiquette 200 qui recouvre la paroi de fermeture 310 dudit couvercle comporte une première partie latérale 214 amovible incluant une languette 220, reliée à une seconde partie latérale 215, par l'intermédiaire d'une ligne de prédécoupage 213. La partie amovible recouvre l'emplacement 330 dans lequel est présent l'ustensile 340. Cette variante de réalisation convient en particulier pour des couvercles de forme carrée, rectangulaire et de manière générale de forme polygonale.

En prévoyant sous la seconde partie latérale 215, un second emplacement incluant un autre ustensile et en dotant cette seconde partie latérale d'une languette de préhension, on obtient un couvercle proposant deux ustensiles, par exemple un couteau et une fourchette. On remarquera alors que l'étiquette pourrait être, dans ce cas présent, constituée d'une seule pièce pourvue d'une languette de préhension.

Dans la variante de réalisation du couvercle présentée sur la Fig. 8, l'étiquette 200 qui recouvre la paroi de fermeture 310 dudit couvercle 300 est d'un seul tenant si bien que lorsque l'utilisateur tire sur la languette 220, il peut la retirer complètement. Plus aucun marquage n'apparaît alors sur le couvercle. L'utilisateur accède à l'ustensile pour le retirer de son emplacement.

Le couvercle de l'invention incorpore ainsi un couvert facilement accessible permettant à l'utilisateur de déguster le produit n'importe où.

Un emballage comprenant un contenant ainsi qu'un couvercle tel qu'il vient d'être décrit fait également partie de l'invention.

L'usage de l'emballage se présente de la manière suivante. L'utilisateur saisit la languette 220, puis retire l'étiquette ou la partie attenante de l'étiquette. Il extrait l'ustensile 340 de son emplacement de stockage 330. Il retire le couvercle 300 de dessus le contenant 400. Il retire également l'opercule de préservation de la denrée alimentaire. Il peut ainsi consommer le produit alimentaire où bon lui semble sans se soucier de prévoir le ou les ustensiles appropriés.

Le couvercle de l'invention propose pour un coût sensiblement égal à un couvercle conventionnel la faculté de pouvoir stocker un ou plusieurs ustensiles que l'utilisateur peut utiliser en retirant une étiquette ou une partie d'étiquette recouvrant leur(s) emplacement(s) de stockage.

L'invention couvre également un couvercle d'un contenant pour un emballage de type non alimentaire. A titre d'illustration, on peut citer un couvercle refermant un pot de colle, de peinture et dans lequel une spatule est placée dans un emplacement recouvert par une étiquette amovible ou une partie d'étiquette amovible.

## Revendications

1. Couvercle (300) destiné à fermer l'ouverture d'un contenant (400) d'un emballage (100), le couvercle (300) comprenant une paroi de fermeture (310), le couvercle étant fabriqué en matière plastique par injection de matière dans un moule (500), une étiquette (200) posée par un procédé dit In Mold Labelling recouvrant la face externe de la paroi de fermeture (310), la matière de l'étiquette (200) étant différente de celle du couvercle (300), **caractérisé en ce que** l'étiquette (200) recouvre un emplacement (330) dans lequel est présent un ustensile (340), l'emplacement (330) étant formé d'un passage réalisé au travers de la paroi de fermeture (310), et **en ce que** l'étiquette (200) comprend une partie centrale (211) ou une partie latérale (214) amovible recouvrant l'emplacement (330), et une ligne de prédécoupage (213a, 213b ; 213) délimitant la ou chaque frontière entre ladite partie amovible (211, 214) et au moins une autre partie de l'étiquette (212a, 212b ; 215).

2. Couvercle (300) selon la revendication 1, **caractérisé en ce que** l'étiquette (200) est formée d'une partie centrale (211) placée entre deux autres parties latérales (212a et 212b), deux lignes de prédécoupage (213a, 213b) délimitant respectivement la frontière entre la partie centrale (211) et les deux autres parties latérales (212a, 212b), la partie centrale (211) recouvrant l'emplacement (330), la partie centrale (211) incluant une languette de préhension (220).

3. Couvercle (300) selon la revendication 1, **caractérisé en ce que** l'étiquette (200) est formée d'une première partie latérale (214), reliée à une seconde autre partie latérale (215) par l'intermédiaire d'une ligne de prédécoupage (213), la première partie latérale (214) recouvrant l'emplacement (330), la première partie latérale (214), incluant une languette de préhension (220).

4. Couvercle (300) selon la revendication 1, 2 ou 3, **caractérisé en ce que** l'ustensile (340) est solidaire du couvercle (300), dans l'emplacement (330), par l'intermédiaire de pontets de liaison (342).

5. Couvercle (300) selon l'une quelconque des revendications précédentes, **caractérisé en ce qu'**il est fabriqué dans une matière différente de celle de l'ustensile (340).

6. Couvercle (300) selon l'une quelconque des revendications précédentes, **caractérisé en ce que** l'ustensile (340) est un composant rapporté dans l'emplacement (330).

7. Couvercle (300) selon l'une quelconque des revendications 1 à 6, **caractérisé en ce que** le couvercle (300) est fabriqué en polypropylène injecté et l'étiquette (200) ou une sous-couche (230) de ladite étiquette (200) destinée à être mise en contact avec ledit couvercle (300), est fabriquée en polyéthylène expansé de type basse densité.

8. Couvercle (300) selon l'une quelconque des revendications 1 à 6, **caractérisé en ce que** le couvercle (300) est fabriqué en polypropylène injecté et l'étiquette (200) ou une sous-couche (230') de ladite étiquette (200) destinée à être mise en contact avec ledit couvercle (300), est fabriquée en polypropylène de type pelable, fabriqué par un procédé de coextrusion ou par un procédé d'enduction.

9. Couvercle (300) selon l'une quelconque des revendications 1 à 6, **caractérisé en ce que** le couvercle (300) est fabriqué en polypropylène injecté et une sous-couche (230") de ladite étiquette (200) destinée à être mise en contact avec ledit couvercle (300), est fabriquée en un vernis de type pelable, plein ou tramé, imprimé au verso de l'étiquette (200).

10. Emballage (100) du type comprenant un contenant (400), **caractérisé en ce qu'**il comprend un couvercle (300) selon l'une quelconque des revendications précédentes.

11. Emballage (100) selon la revendication 10, **caractérisé en ce qu'**il se présente sous la forme d'un pot alimentaire.

## Patentansprüche

1. Deckel (300), dazu bestimmt, die Öffnung eines Behälters (400) einer Verpackung (100) zu schließen, wobei der Deckel (300) eine Schließwand (310) aufweist, wobei der Deckel aus Kunststoff durch Einspritzung von Material in eine Gussform (500) gefertigt wird, wobei ein Etikett (200), das durch ein als In Mold Labelling bezeichnetes Verfahren angebracht wird, die Außenseite der Schließwand (310) überdeckt, wobei das Material des Etiketts (200) von demjenigen des Deckels (300) verschieden ist, **dadurch gekennzeichnet, dass** das Etikett (200) einen Aufnahmebereich (330) überdeckt, in welchem ein Utensil (340) vorhanden ist, wobei der Aufnahmebereich (330) aus einer Durchführung gebildet wird, die durch die Schließwand (310) ausgeführt ist, und dadurch, dass das Etikett (200) einen ablösbaren mittleren Teil (211) oder einen seitlichen Teil (214), die den Aufnahmebereich (330) überdecken, und eine Vorstanzlinie (213a, 213b, 213) umfasst, welche die oder jede Grenze zwischen dem ablösbaren Teil (211, 214) und mindestens einem anderen Teil des Etiketts (212a, 212b; 215) begrenzt.

2. Deckel (300) nach Anspruch 1, **dadurch gekennzeichnet, dass** das Etikett (200) aus einem mittleren Teil (211) gebildet ist, der zwischen zwei anderen seitlichen Teilen (212a und 212b) platziert ist, wobei zwei Vorstanzlinien (213a, 213b) jeweils die Grenze zwischen dem mittleren Teil (211) und den zwei anderen seitlichen Teilen (212a, 212b) begrenzen, wobei der mittlere Teil (211) den Aufnahmebereich (330) überdeckt und der mittlere Teil (211) eine Greiflasche (220) umfasst.

3. Deckel (300) nach Anspruch 1, **dadurch gekennzeichnet, dass** das Etikett (200) aus einem ersten seitlichen Teil (214) gebildet wird, der mit einem zweiten anderen seitlichen Teil (215) über eine Vorstanzlinie (213) verbunden ist, wobei der erste seitliche Teil (214) den Aufnahmebereich (330) überdeckt und der erste seitliche Teil (214) eine Greiflasche (220) umfasst.

4. Deckel (300) nach Anspruch 1, 2 oder 3, **dadurch gekennzeichnet, dass** das Utensil (340) in dem Aufnahmebereich (330) über Verbindungsbrücken (342) mit dem Deckel (300) fest verbunden ist.

5. Deckel (300) nach einem der vorhergehenden Ansprüche, **dadurch gekennzeichnet, dass** er aus einem anderen Material als demjenigen des Utensils (340) gefertigt ist.

6. Deckel (300) nach einem der vorhergehenden Ansprüche, **dadurch gekennzeichnet, dass** das Utensil (340) eine in den Aufnahmebereich (330) eingebrachte Komponente ist.

7. Deckel (300) nach einem der Ansprüche 1 bis 6, **dadurch gekennzeichnet, dass** der Deckel (300) aus spritzgegossenem Polypropylen gefertigt ist und das Etikett (200) oder eine Unterschicht (230) des Etiketts (200), die dazu bestimmt ist, mit dem Deckel (300) in Kontakt zu treten, aus expandiertem Polyethylen des Typs mit niedriger Dichte gefertigt ist.

8. Deckel (300) nach einem der Ansprüche 1 bis 6, **dadurch gekennzeichnet, dass** der Deckel (300) aus spritzgegossenem Polypropylen gefertigt ist und das Etikett (200) oder eine Unterschicht (230') des Etiketts (200), die dazu bestimmt ist, mit dem Deckel (300) in Kontakt zu treten, aus Polypropylen des abziehbaren Typs gefertigt ist, das durch ein Coextrusionsverfahren oder durch ein Beschichtungsverfahren hergestellt wird.

9. Deckel (300) nach einem der Ansprüche 1 bis 6, **dadurch gekennzeichnet, dass** der Deckel (300) aus spritzgegossenem Polypropylen gefertigt ist, und das Etikett (200) oder eine Unterschicht (230") des Etiketts (200), die dazu bestimmt ist, mit dem Deckel (300) in Kontakt zu treten, aus einem Lack des abziehbaren Typs, vollflächig oder gerastert, gefertigt ist, der auf der Rückseite des Etiketts (200) aufgedruckt ist.

10. Verpackung (100) des Typs, der einen Behälter (400) umfasst, **dadurch gekennzeichnet, dass** sie einen Deckel (300) nach einem der vorhergehenden Ansprüche aufweist.

11. Verpackung (100) nach Anspruch 10, **dadurch gekennzeichnet, dass** sie in Form eines Bechers für Lebensmittel vorliegt.

## Claims

1. Cover (300) Intended for closing the opening of a receptacle (400) of a packaging Item (100), the cover (300) comprising a closure wall (310), the cover being made of plastics by Injecting the material into a mould (500), a label (200) applied by a process known as In Mould Labelling covering the outer surface of the closure wall (310), the material of the label (200) being different from that of the cover (300), **characterised in that** the label (200) covers a location (330) in which a utensil (340) Is provided, the location (330) being formed by a passage provided through the closure wall (310), and **In that** the label (200) comprises a removable central part (211) or lateral part (214) covering the location (330), and a pre-cut line (213a, 213b; 213) delimiting the or each boundary between said removable part (211, 214) and at least one other part of the label (212a, 212b; 215).

2. Cover (300) according to claim 1, **characterised in that** the label (200) is formed by a central part (211) placed between two other lateral parts (212a and 212b), two pre-cut lines (213a, 213b) respectively delimiting the boundary between the central part (211) and the two other lateral parts (212a, 212b), the central part (211) covering the location (330), the central part (211) comprising a gripper tab (220).

3. Cover (300) according to claim 1, **characterised in that** the label (200) is formed by a first lateral part (214) connected to a second other lateral part (215) via a pre-cut line (213), the first lateral part (214) covering the location (330), the first lateral part (214) comprising a gripper tab (220).

4. Cover (300) according to claim 1, 2 or 3, **characterised in that** the utensil (340) is integral with the cover (300), in the location (330), via connecting bridges (342).

5. Cover (300) according to any one of the preceding claims, **characterised in that** It is made from a different material than the utensil (340).

6. Cover (300) according to any one of the preceding claims, **characterised in that** the utensil (340) Is a component mounted in the location (330).

7. Cover (300) according to any one of claims 1 to 6, **characterised in that** the cover (300) is made of injected polypropylene and the label (200) or a sub-layer (230) of said label (200) intended to be brought into contact with said cover (300) is made of low density expanded polyethylene.

8. Cover (300) according to any one of claims 1 to 6, **characterised in that** the cover (300) is made of injected polypropylene and the label (200) or a sub-layer (230') of said label (200) intended to be brought into contact with said cover (300) is made of peelable polypropylene, produced by a coextrusion process or by a coating process.

9. Cover (300) according to any one of claims 1 to 6, **characterised in that** the cover (300) is made of injected polypropylene and a sub-layer (230") of said label (200) intended to be brought into contact with said cover (300) is made of a varnish of a type that is peelable, solid or in a grid pattern, printed on the reverse of the label (200).

10. Packaging (100) of the type comprising a container (400), **characterised in that** it comprises a cover (300) according to any one of the preceding claims.

11. Packaging (100) according to claim 10, **characterised in that** it takes the form of a pot for food.
